(19) Europäisches Patentamt / European Patent Office / Office européen des brevets

(11) **EP 4 478 708 A1**

(12) **EUROPEAN PATENT APPLICATION**
published in accordance with Art. 153(4) EPC

(43) Date of publication:
**18.12.2024 Bulletin 2024/51**

(21) Application number: **23753145.4**

(22) Date of filing: **08.02.2023**

(51) International Patent Classification (IPC):
**H04N 19/11** (2014.01)   **H04N 19/593** (2014.01)
**H04N 19/184** (2014.01)   **H04N 19/70** (2014.01)
**H04N 19/119** (2014.01)

(52) Cooperative Patent Classification (CPC):
**H04N 19/11; H04N 19/119; H04N 19/184;**
**H04N 19/593; H04N 19/70**

(86) International application number:
**PCT/KR2023/001839**

(87) International publication number:
**WO 2023/153797 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.02.2022   KR 20220015890**

(71) Applicant: **LG Electronics Inc.**
**Yeongdeungpo-gu**
**Seoul 07336 (KR)**

(72) Inventors:
• **YOO, Sunmi**
  **Seoul 06772 (KR)**
• **NAM, Junghak**
  **Seoul 06772 (KR)**
• **JANG, Hyeongmoon**
  **Seoul 06772 (KR)**
• **CHOI, Jangwon**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD AND APPARATUS, AND RECORDING MEDIUM HAVING BITSTREAM STORED THEREIN**

(57)    An image decoding/encoding method and apparatus, according to the present disclosure, may comprise: deriving an intra-prediction mode of a current block on the basis of a gradient between at least two samples in a peripheral region adjacent to the current block; configuring a reference sample of the current block; and generating a prediction block of the current block on the basis of the intra-prediction mode and the reference sample.

**FIG.4**

Derive intra prediction mode — S400

Determine reference sample — S410

Perform intra prediction based on intra prediction mode and reference sample — S420

EP 4 478 708 A1

**Description**

[Technical Field]

The present disclosure relates to an image encoding/decoding method and device, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure seeks to provide a method and a device for selectively applying a position dependent intra sample modification method to a prediction sample generated by a gradient-based derivation method.

The present disclosure seeks to provide a method and a device for applying a position dependent intra sample modification method according to an intra prediction mode when a weighted sum for a plurality of prediction blocks is performed by a gradient-based prediction mode derivation method.

[Technical Solution]

An image decoding method and device according to the present disclosure may derive an intra prediction mode of a current block based on a gradient between at least two samples belonging to a neighboring region adjacent to the current block, configure a reference sample of the current block and generate a prediction block of the current block based on the intra prediction mode and the reference sample.

An image decoding method and device according to the present disclosure may generate a plurality of temporary prediction blocks based on each of the plurality of derived intra prediction modes when a plurality of intra prediction modes are derived based on a gradient between the at least two samples and generate a prediction block of the current block by weighted summing a planar temporary prediction block generated by a planar mode and the plurality of temporary prediction blocks.

An image decoding method and device according to the present disclosure may modify a prediction block or a temporary prediction block of the current block by applying position dependent intra prediction to the current block.

In an image decoding method and device according to the present disclosure, the position dependent intra prediction may be applied to each of the plurality of temporary prediction blocks according to whether each of the plurality of temporary prediction blocks is predicted by one of the predefined intra prediction modes.

In an image decoding method and device according to the present disclosure, the position dependent intra prediction may be individually applied to the plurality of temporary prediction blocks and the planar temporary prediction block.

In an image decoding method and device according to the present disclosure, the position dependent intra prediction may be applied only to the planar temporary prediction block among the plurality of temporary prediction blocks and the planar temporary prediction block.

In an image decoding method and device according to the present disclosure, whether the position dependent intra prediction is applied may be determined based on at least one of a prediction direction of the plurality of intra prediction modes, a size of a gradient for the plurality of intra prediction modes or a weight applied to the weighted sum.

In an image decoding method and device according to the present disclosure, the position dependent intra prediction may be applied only to a temporary prediction block generated by a main intra prediction mode having the largest size of a gradient among the plurality of intra prediction modes.

In an image decoding method and device according to the present disclosure, the position dependent intra prediction may be applied to a prediction block of the current block that is a weighted sum of the plurality of temporary prediction blocks and the planar temporary prediction block.

In an image decoding method and device according to the present disclosure, whether to apply the position dependent intra prediction may be determined according to whether a main intra prediction mode having the largest size of a gradient among the plurality of intra prediction modes is one of the predefined intra prediction modes.

In an image decoding method and device according to the present disclosure, when the gradient-based intra prediction mode derivation method is applied to the current block, position dependent intra prediction may not be applied to the current block.

An image encoding method and device according to the present disclosure may determine an intra prediction mode of a current block based on a gradient between at least two samples belonging to a neighboring region adjacent to the current block, configure a reference sample of the current block and generate a prediction block of the current block based on the intra prediction mode and the reference sample.

An image encoding method and device according to the present disclosure may generate a plurality of temporary prediction blocks based on each of the plurality of determined intra prediction modes when a plurality of intra prediction modes are determined based on a gradient between the at least two samples and generate a prediction block of the current block by weighted summing a planar temporary prediction block generated by a planar mode and the plurality of temporary prediction blocks.

An image encoding method and device according to the present disclosure may modify a prediction block or a temporary prediction block of the current block by applying position dependent intra prediction to the current block.

In an image encoding method and device according to the present disclosure, the position dependent intra prediction may be applied to each of the plurality of temporary prediction blocks according to whether each of the plurality of temporary prediction blocks is predicted by one of the predefined intra prediction modes.

In an image encoding method and device according to the present disclosure, the position dependent intra prediction may be individually applied to the plurality of temporary prediction blocks and the planar temporary prediction block.

In an image encoding method and device according to the present disclosure, the position dependent intra prediction may be applied only to the planar temporary prediction block among the plurality of temporary prediction blocks and the planar temporary prediction block.

In an image encoding method and device according to the present disclosure, whether the position dependent intra prediction is applied may be determined based on at least one of a prediction direction of the plurality of intra prediction modes, a size of a gradient for the plurality of intra prediction modes or a weight applied to the weighted sum.

In an image encoding method and device according to the present disclosure, the position dependent intra prediction may be applied only to a temporary prediction block generated by a main intra prediction mode having the largest size of a gradient among the plurality of intra prediction modes.

In an image encoding method and device according to the present disclosure, the position dependent intra prediction may be applied to a prediction block of the current block that is a weighted sum of the plurality of temporary prediction blocks and the planar temporary prediction block.

In an image encoding method and device according to the present disclosure, whether to apply the position dependent intra prediction may be determined according to whether a main intra prediction mode having the largest size of a gradient among the plurality of intra prediction modes is one of the predefined intra prediction modes.

A computer-readable digital storage medium storing encoded video/image information resulting in performing an image decoding method due to a decoding device according to the present disclosure is provided.

A computer-readable digital storage medium storing video/image information generated according to an image encoding method according to the present disclosure is provided.

A method and a device for transmitting video/image information generated according to an image encoding method according to the present disclosure are provided.

[Technical Effects]

According to the present disclosure, a position dependent intra sample modification method may be selectively applied by considering that discontinuity between a reference sample and a prediction sample that a position dependent intra sample modification method seeks to resolve may be improved by being blended based on various prediction angles according to a gradient-based derivation method, improving computational complexity and compression efficiency.

According to the present disclosure, since a position dependent intra sample modification method is generally applied to a planar mode prediction block all the time, implementation and design complexity may be reduced by granting consistency to a planar mode prediction method from the perspective of hardware design.

According to the present disclosure, prediction performance may be improved by selectively applying a position dependent intra sample modification method to a prediction block generated by a gradient-based derivation method, and the computational complexity of a position dependent intra sample modification method processed in a unit of a pixel may be improved.

[Brief Description of the Drawings]

FIG. 1 shows a video/image coding system according to the present disclosure.

FIG. 2 shows a rough block diagram of an encoding device to which an embodiment of the present disclosure may be applied and encoding of a video/image signal is performed.

FIG. 3 shows a rough block diagram of a decoding device to which an embodiment of the present disclosure may be applied and decoding of a video/image signal is performed.

FIG. 4 shows an intra prediction method performed by a decoding device as an embodiment according to the present disclosure.

FIG. 5 shows a rough configuration of an intra prediction unit 331 that performs an intra prediction method according to the present disclosure.

FIG. 6 shows an intra prediction method performed by an encoding device as an embodiment according to the present disclosure.

FIG. 7 shows a rough configuration of an intra prediction unit 222 that performs an intra prediction method according to the present disclosure.

FIG. 8 shows an example of a contents streaming system to which embodiments of the present disclosure may be applied.

[Detailed Description]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (WC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

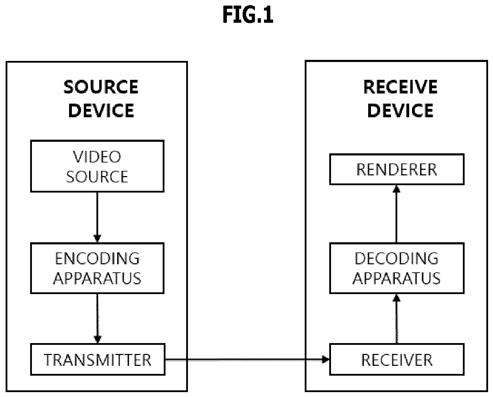

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding device and a transmission unit. The receiving device may include a reception unit, a decoding device and a renderer. The encoding device may be referred to as a video/image encoding device and the decoding device may be referred to as a video/image decoding device. A transmitter may be included in an encoding device. A receiver may be included in a decoding device. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding device may encode an input video/image. An encoding device may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding device.

A decoding device may decode a video/an image by performing a series of procedures such as dequantization, inverse transform, prediction, etc. corresponding to an operation of an encoding device.

A renderer may render a decoded video/image. A rendered video/image may be displayed through a display unit.

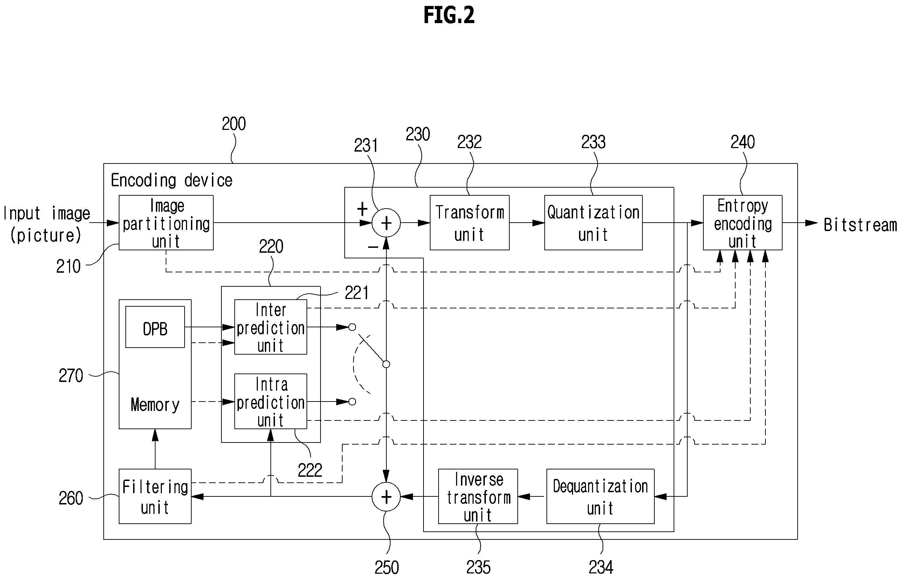

FIG. 2 shows a rough block diagram of an encoding device to which an embodiment of the present disclosure may be applied and encoding of a video/image signal is performed.

Referring to FIG. 2, an encoding device 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding device 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding device 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding device 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding device to a decoding device may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding device 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding device may avoid prediction mismatch in an encoding device 200 and a decoding device, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

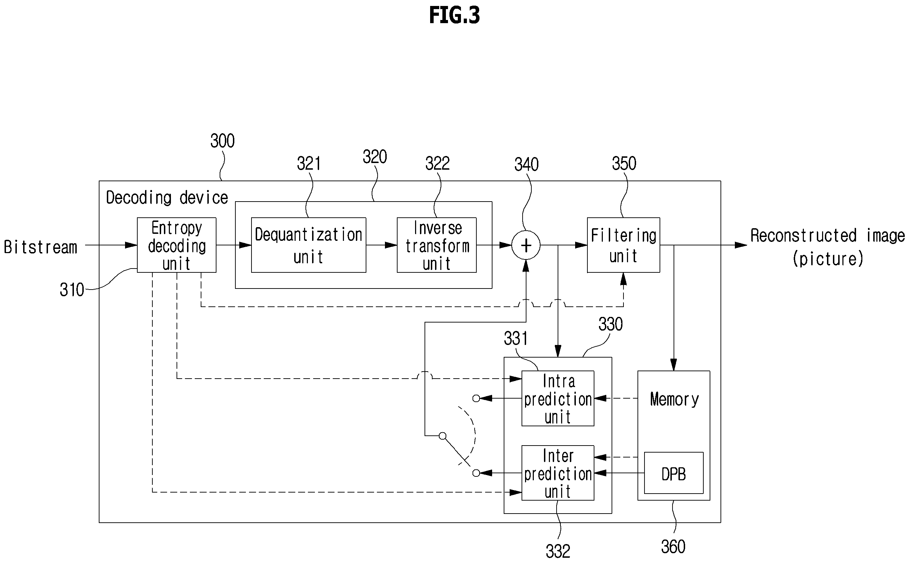

FIG. 3 shows a rough block diagram of a decoding device to which an embodiment of the present disclosure may be applied and decoding of a video/image signal is performed.

Referring to FIG. 3, a decoding device 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding device 300 may reconstruct an image in response to a process in which video/image information is processed in an encoding device of FIG. 2. For example, a decoding device 300 may derive units/blocks based on block partition-related information obtained from the bitstream. A decoding device 300 may perform decoding by using a processing unit applied in an encoding device. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding device 300 may be played through a playback device.

A decoding device 300 may receive a signal output from an encoding device of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding device may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding device may be further configured as an internal/external element of a decoding device 300 or a reception unit may be a component of an entropy decoder 310.

Meanwhile, a decoding device according to this specification may be referred to as a video/image/picture decoding device, and the decoding device may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding device. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding device 200 may be also applied equally or correspondingly to a filter 350, an inter predictor 332 and an intra predictor 331 of a decoding device 300, respectively.

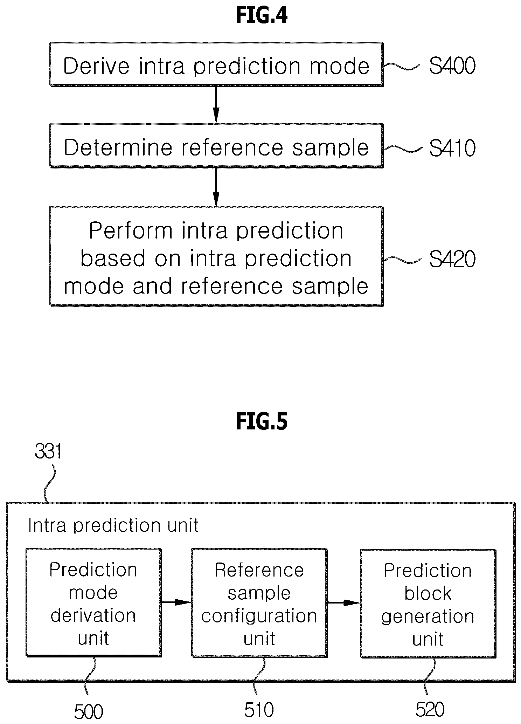

FIG. 4 shows an intra prediction method performed by a decoding device as an embodiment according to the present disclosure.

Referring to FIG. 4, a decoding device may derive an intra prediction mode of a current block S400.

An intra prediction mode of a current block may be derived from intra prediction modes that are pre-defined in a decoding device. The pre-defined intra prediction modes may include a non-directional mode and a directional mode. Here, a non-directional mode may include at least one of a planar mode or a DC mode. An intra prediction mode of a current block may be derived based on a most probable mode (MPM) or may be derived based on a gradient based on at least two samples belonging to a neighboring region of a current block.

MPM-based Derivation Method

According to a MPM-based derivation method, an intra prediction mode of a current block may be derived based on signaled intra prediction mode information. Here, intra prediction mode information includes one or more flags and/or indexes, and based thereon, an intra prediction mode of a current block may be derived.

Intra prediction modes that are pre-defined in a decoding device may be divided into K groups. Here, K may be an integer of 2, 3, 4, or more. Hereinafter, for convenience of a description, it is assumed that the pre-defined intra prediction modes are divided into three groups, and three groups are referred to as a first group to a third group.

A first group may include one or more non-directional modes. A non-directional mode may refer to at least one of a planar mode or a DC mode.

A second group may be referred to as a MPM list, which may include a plurality of most probable modes (MPM). A plurality of MPMs may include at least one of an intra prediction mode, a derived mode, or a default mode of a neighboring block adjacent to a current block.

The neighboring block may include at least one of a left block, a top block, a bottom-left block, a top-right block, or a top-left block. A mode of the neighboring block may be sequentially added to a MPM list according to a priority between the neighboring blocks. Here, a priority may be defined in the order of a left block, a top block, a bottom-left block, a top-right block and a top-left block, or may be defined in the order of a top block, a left block, a bottom-left block, a top-right block and a top-left block. Alternatively, the priority order may be adaptively determined based on a size and/or a shape of a current block. As an example, if a height of a current block is greater than a width, the priority of a top block, a left block, a bottom-left block, a top-right block, and a top-left block may be used. Conversely, if a width of a current block is greater than a height, the priority of a left block, a top block, a bottom-left block, a top-right block, and a top-left block may be used.

The derived mode may be derived by adding or subtracting an offset to or from an intra prediction mode of the neighboring block. Alternatively, the derived mode may be derived by adding or subtracting an offset to or from a default mode described later. Here, an offset may be an integer of 1, 2, 3, 4, or more. The derived mode may be derived based on a neighboring block with a high priority among the above-described neighboring blocks. The derived mode may not be derived based on a neighboring block with a low priority among the above-described neighboring blocks. Here, a neighboring block with a high priority may include at least one of a left block or a top block. Conversely, a neighboring block with a low priority may include at least one of a bottom-left block, a top-right block, or a top-left block. However, if an intra prediction mode of a neighboring block corresponds to a non-directional mode, the derived mode may not be derived based on an intra prediction mode of a corresponding neighboring block.

The default mode may refer to a mode that is pre-defined in a decoding device to configure a MPM list. As an example, a default mode may include at least one of a planar mode, a DC mode, a horizontal mode, a vertical mode, or a diagonal mode. Here, a diagonal mode may refer to one or more of a bottom-left diagonal mode, a top-left diagonal mode, or a top-right diagonal mode.

The second group may be divided into two sub-groups, which will be referred to as a primary MPM list and a secondary MPM list. As an example, if a MPM list consists of N MPMs, M top MPMs belonging to a MPM list may be included in a primary MPM list, and the (N-M) remaining MPMs may be included in a secondary MPM list. In other words, a primary MPM list may include a MPM with an index of 0 to (M-1) belonging to a MPM list. Here, N may refer to the maximum number of MPMs that may be included in a MPM list. M refers to the maximum number of MPMs that may be included in a primary MPM list, and as an example, M may be an integer of 3, 4, 5, 6, or more.

A third group may include the remaining modes that do not belong to a first group and a second group among the pre-defined intra prediction modes.

In the embodiment, a first group is defined as a separate group distinct from a second group, but is not limited thereto. As an example, a first group and a second group may be defined as one group, and in this case, a non-directional mode of a first group may be any one of MPMs included in a MPM list of a second group.

One or more flags may be signaled to specify a group and/or a sub-group to which the same mode as an intra prediction mode of a current block belongs. The flag may include at least one of a first flag indicating whether the same mode as an intra prediction mode of a current block belongs to a first group, a second flag indicating whether the same mode as an intra prediction mode of a current block belongs to a second group (i.e., a MPM list), a third flag indicating whether the same mode as an intra prediction mode of a current block belongs to a primary MPM list, or a fourth flag indicating whether the same mode as an intra prediction mode of a current block belongs to a secondary MPM list.

When a second group is specified by the flag, an index specifying any one of a plurality of MPMs belonging to a second group may be signaled. An intra prediction mode of a current block may be derived based on a MPM specified by the index. Alternatively, when a primary MPM list is specified by the flag, an index specifying any one of a plurality of MPMs belonging to a primary MPM list may be signaled. An intra prediction mode of a current block may be derived based on a MPM specified by the index. Alternatively, when a secondary MPM list is specified by the flag, an index specifying any one of a plurality of MPMs belonging to a secondary MPM list may be signaled. An intra prediction mode of a current block may be derived based on a MPM specified by the index. Likewise, when a first group (or a third group) is specified by the flag, an index specifying any one of a plurality of intra prediction modes belonging to a first group (or a third group) may be signaled separately, and an intra prediction mode of a current block may be derived based on a signaled index. However, when a first group (or a third group) consists of one intra prediction mode, signaling of the index may be omitted.

The above-described flag may be signaled with dependency between flags. As an example, a first flag may be parsed after a second flag is parsed from a bitstream. A first flag may be parsed when a second flag is True. Alternatively, a second flag may be parsed after a first flag is parsed from a bitstream. A second flag may be parsed when a first flag is False. If a second flag is True, a third flag (or a fourth flag) may be parsed from a bitstream, and if a second flag is False, a third flag (or a fourth flag) may not be parsed from a bitstream. Alternatively, a fourth flag may be parsed after a third flag is parsed from a bitstream. A fourth flag may be parsed when a third flag is False.

Gradient-based Derivation Method

A gradient may be calculated based on at least two samples belonging to a neighboring region of a current block. Here, a gradient may include at least one of a horizontal gradient or a vertical gradient. Based on at least one of a horizontal gradient or a vertical gradient calculated above, an intra prediction mode of a current block may be derived. An amplitude of a gradient may be determined based on a sum of a horizontal gradient and a vertical gradient. Through this derivation method, one intra prediction mode may be derived for a current block, or at least two intra prediction modes may be derived. In the present disclosure, a gradient-based derivation method may be referred to as a decoder side Intra Mode Derivation (DIMD) mode. A gradient-based derivation method may be derived and used in an encoder and a decoder without directly transmitting intra prediction mode information.

As an embodiment, when a gradient-based derivation method is applied, at least one intra prediction mode may be derived from a reconstructed neighboring sample. In this case, at least one prediction mode may be derived based on a gradient calculated from a reconstructed neighboring sample according to an embodiment of the present disclosure. For example, at least one or two intra prediction modes may be derived from a reconstructed neighboring sample. As an example, the maximum number of intra prediction modes derived through a gradient-based derivation method may be predefined in an encoder/a decoder. As an example, the maximum number of intra prediction modes derived through a gradient-based derivation method may be N. For example, N may be defined as 1, 2, 3, 4, 5, 6, 7. In addition, when a neighboring pixel may not be utilized or when the directivity of a neighboring block may not be specified, a default mode may be configured. In this case, a default mode may be configured as a non-directional mode. A default mode may be configured as a planar mode. A default mode may be configured as a planar mode and/or a DC mode.

As an example, a predictor obtained by a derived intra prediction mode (it may be referred to as a prediction sample or a prediction block) may be combined with a predictor obtained by a planar mode (it may be abbreviated as a planar mode predictor). For example, a predictor obtained by a derived intra prediction mode may be weighted summed with a planar mode predictor. In this case, as an example, a weight used for the weighted sum may be determined based on a gradient calculated from a reconstructed neighboring sample according to an embodiment of the present disclosure.

In addition, as an example, when at least two intra prediction modes are derived through a gradient-based derivation method, a predictor obtained by a derived intra prediction mode may be combined with a planar mode predictor. As an example, When one intra prediction mode is derived through a gradient-based derivation method, a predictor obtained by one derived intra prediction mode may be output as a prediction sample or a prediction block by a gradient-based derivation method without being combined (or weighted sum) with a planar mode predictor.

In addition, as an example, a gradient may be calculated in a unit of a window with a predetermined size. Based on a calculated gradient, an angle showing directivity of a sample within a corresponding window may be calculated. A calculated angle may correspond to any one of a plurality of pre-defined intra prediction modes described above. An amplitude of the gradient may be stored/updated for an intra prediction mode corresponding to the calculated angle. In the present disclosure, a size of the gradient may be referred to as an amplitude of a gradient, a histogram amplitude, a histogram size, etc. Through this process, an intra prediction mode corresponding to a calculated gradient may be determined per each window. An amplitude of a gradient may be stored/updated for a determined intra prediction mode. T top intra prediction modes having the largest amplitude may be selected among the amplitudes of the stored gradient, and a selected intra prediction mode may be configured as an intra prediction mode of a current block. Here, T may be an integer of 1, 2, 3, or more.

As an example, a neighboring region of a current block may be a left, top-left or top region of a current block. For example, a horizontal gradient and a vertical gradient may be derived from a row and a column of a second neighboring sample. A row and/or a column of the second neighboring sample may represent a row and a column of a neighboring sample right adjacent to a current block and a next row and/or column. As an example, a histogram (HoG) of a gradient may be derived from a derived horizontal gradient and vertical gradient. A gradient or a histogram of a gradient may be derived by applying a window by using a L-shaped row and column of 3 pixels (or pixel lines) around a current block. In this case, a window may be defined as 3x3 in size. However, as an example, it is not limited thereto, and a window may be defined as 2x2, 4x4, 5x5, etc. in size. In addition, as an example, a window may be a sobel filter.

As an example, at least two intra prediction modes having the largest size (or amplitude) of a gradient may be selected. A final prediction block may be generated by blending (or combining, weighted sum) a prediction block predicted by using a planar mode and prediction blocks predicted by using selected intra prediction modes. In this case, a weight applied to each prediction block may be derived based on a histogram amplitude. For example, when two intra prediction modes are derived and weighted summed with a planar mode predictor, a weight may be determined as in the following Equation 1.

## [Equation 1]

$$\omega_1 = \frac{43}{64} \times \frac{ampl(M_1)}{ampl(M_1) + ampl(M_2)}$$

$$\omega_2 = \frac{43}{64} \times \frac{ampl(M_2)}{ampl(M_1) + ampl(M_2)}$$

$$\omega_3 = \frac{21}{64}$$

In Equation 1, $M_1$ represents a first intra prediction mode among the two derived intra prediction modes and $M_2$ represents a second intra prediction mode among the two derived intra prediction modes. $\omega_1$ represents a weight applied to a prediction block predicted by $M_1$, $\omega_2$ represents a weight applied to a prediction block predicted by $M_2$ and $\omega_3$ represents a weight applied to a prediction block predicted by a planar mode. However, Equation 1 is an example, and an embodiment of the present disclosure is not limited thereto.

A neighboring region used to calculate the gradient is a region which is pre-reconstructed before a current block, and may include at least one of a left region, a top region, a top-left region, a bottom-left region or a top-right region adjacent to a current block. The neighboring region may include at least one of a neighboring sample line adjacent to a current block, a first non-neighboring sample line 1 sample away from a current block, or a second non-neighboring sample line 2 samples away from a current block. However, it is not limited thereto, and a non-neighboring sample line N-samples away from a current block may be further included, and N may be an integer greater than or equal to 3.

The neighboring region may be a region that is pre-defined equally for an encoding device and a decoding device for calculating the gradient. Alternatively, the neighboring region may be variably determined based on information specifying a position of the neighboring region. In this case, information specifying a position of the neighboring region may be signaled through a bitstream. Alternatively, a position of the neighboring region may be determined based on at least one of whether a current block is positioned at a boundary of a coding tree unit, a size of a current block (e.g., a width, a height, a width to height ratio, a product of a width and a height), a partition type of a current block, a prediction mode of a neighboring region or availability of a neighboring region.

As an example, when a current block is positioned at a top boundary of a coding tree unit, at least one of a top region, a top-left region or a top-right region of a current block may not be referred to for calculating a gradient. If a width of a current block is greater than a height, any one of a top region or a left region (e.g., a top region) may be referred to for calculating a gradient, and the other (e.g., a left region) may not be referred to for calculating a gradient.

Conversely, if a width of a current block is less than a height, any one of a top region or a left region (e.g., a left region) may be referred to for calculating a gradient, and the other (e.g., a top region) may not be referred to for calculating a gradient. If a current block is generated through horizontal block partition, a top region may not be referred to for calculating a gradient. Conversely, if a current block is generated through vertical block partition, a left region may not be referred to for calculating a gradient. If a neighboring region of a current block is encoded in an inter mode, a corresponding neighboring region may not be referred to for calculating a gradient. However, it is not limited thereto, and regardless of a prediction mode of a neighboring region, a corresponding neighboring region may be referred to for calculating a gradient.

The above-described gradient-based derivation method may be used adaptively based on a predetermined flag (Dimd_flag). Here, a flag may indicate whether an intra prediction mode of a current block is derived based on a gradient calculated from a neighboring region adjacent to a current block. As an example, when the flag is a first value, an intra prediction mode of a current block may be derived by using a gradient-based derivation method, and when the flag is a second value, an intra prediction mode of a current block may not be derived by a gradient-based prediction mode derivation method. If an intra prediction mode of a current block is not derived by a gradient-based prediction mode derivation method, an intra prediction mode of a current block may be derived by various intra prediction methods except for a gradient-based prediction mode derivation method. The various intra prediction methods may be considered for intra prediction with a lower priority than a gradient-based prediction mode derivation method. As an example, the various intra prediction methods may include at least one of an intra template matching prediction method, a geometric partition prediction method, a reference sample line selection prediction method, a template-based prediction mode derivation method, a matrix-based intra prediction method, a sub-block partition prediction method in an intra prediction mode, a MPM-based prediction mode derivation method or a non-MPM-based prediction mode derivation method.

Whether the gradient-based derivation method is available may be determined based on a flag signaled at at least one level of a video sequence, a picture, a picture header, or a slice header.

In terms of a decoding device, the gradient-based derivation method may refer to a method for deriving an intra prediction mode based on a gradient calculated from a neighboring region of a current block.

A decoding device may configure a reference sample of a current block S410. A reference sample for intra prediction of a current block may be determined from one or more reference sample lines. A current block may use one reference sample line, or may use at least two reference sample line.

A reference sample line for intra prediction of a current block may be selected from a plurality of reference sample line candidates that are pre-defined equally for an encoding device and a decoding device. The plurality of pre-defined reference sample line candidates may include at least one of a first reference sample line adjacent to a current block, a second reference sample line 1 sample away from a current block, a third reference sample line 2 samples away from a current block, or a fourth reference sample line 3 samples away from a current block.

To determine a reference sample line of a current block, index information specifying a position of a reference sample line to which a reference sample of a current block belongs may be used. As an example, index information specifying any one of the plurality of reference sample line candidates may be signaled. Alternatively, when two reference sample lines are used for intra prediction of a current block, two index information specifying two reference sample lines among a plurality of reference sample line candidates may be signaled, respectively. Alternatively, as any one of the two reference sample lines is a default reference sample line, signaling of index information therefor may be omitted, and only index information for the other of two reference sample lines may be signaled. Here, a default reference sample line refers to a reference sample line at a pre-defined position equally for an encoding device and a decoding device, and for example, it may be a first reference sample line adjacent to a current block.

Meanwhile, a reference sample line of a current block may be used to determine an intra prediction mode of a current block, and in this case, S410 may be performed before S400.

A decoding device may perform intra prediction of a current block based on an intra prediction mode and a reference sample of a current block S420.

When an intra prediction mode of a current block is a planar mode, a prediction sample (or a prediction block) of a current block may be generated through a first prediction sample, a second prediction sample, or a weighted sum of first and second prediction samples. Here, a first prediction sample may be generated through horizontal interpolation. As an example, a first prediction sample may be generated by interpolating a reference sample positioned at a top-right corner of a current block and one or more reference samples positioned on the same horizontal line as a first prediction sample. The second prediction sample may be generated through vertical interpolation. As an example, a second prediction sample may be generated by interpolating a reference sample positioned at a bottom-left corner of a current block and one or more reference samples positioned on the same vertical line as a second prediction sample.

If an intra prediction mode of a current block is a DC mode, an average value of neighboring samples adjacent to a current block may be calculated, and a calculated average value may be configured as all prediction samples in a current block. Here, a neighboring sample may include a top reference sample and a left reference sample of a current block. However, depending on a shape of a current block, an average value may be calculated by using only a top reference sample or a left reference sample.

If an intra prediction mode of a current block is a directional mode, projection may be performed on a reference sample line according to an angle of a corresponding directional mode. If a reference sample exists at a projected position, a corresponding reference sample may be configured as a prediction sample of a current block. If a reference sample does not exist at a projected position, a sample corresponding to a projected position may be generated by using one or more neighboring samples neighboring a projected position.

As an example, interpolation may be performed based on two or more neighboring samples neighboring in both directions based on a projected position to generate a sample at a projected position (i.e., a fractional-pel position). Alternatively, any one of a plurality of neighboring samples neighboring a projected position may be configured as a sample at a projected position. In this case, among a plurality of neighboring samples neighboring a projected position, a neighboring sample closest to a projected position may be used. A prediction sample of a current block may be generated based on a sample at a projected position.

A plurality of reference sample lines may be used for intra prediction of a current block, and in this case, a projected position may exist for each reference sample line. In other words, a plurality of samples at a projected position may be determined, and a prediction sample of a current block may be generated based on a weighted sum thereof.

As described above, when a gradient-based derivation method is applied, a plurality of intra prediction modes may be derived for a current block. Hereinafter, for convenience of a description, it is assumed that two intra prediction modes are derived for a current block, and it will be referred to as a first intra prediction mode and a second intra prediction mode, respectively.

A decoding device may generate a first prediction sample according to the first intra prediction mode and generate a second prediction sample according to the second intra prediction. A prediction sample of a current block may be generated based on a weighted sum of the first prediction sample and the second prediction sample. Alternatively, a prediction sample of a current block may be generated based on a weighted sum of a first prediction sample, a second prediction sample and a prediction sample generated by a planar mode.

In other words, when two intra prediction modes are derived for a current block, a prediction block of a current block may be generated based on a weighted sum of two prediction blocks generated by each of the two intra prediction modes and a prediction block generated by a planar mode. If five intra prediction modes are derived for a current block, a prediction block of a current block may be generated based on a weighted sum of five prediction blocks generated by each of the five intra prediction modes and a planar mode prediction block.

When the first and second intra prediction modes are derived through a gradient-based derivation method, a weight for the weighted sum may be determined based on an amplitude of a gradient calculated from a neighboring region of a current block. As an example, if an amplitude of a gradient corresponding to a first intra prediction mode is G1 and an amplitude of a gradient corresponding to a second intra prediction mode is G2, a weight of (G1/(G1+G2)) may be applied to a first prediction sample according to a first intra prediction mode, and a weight of (G2/(G1+G2)) may be applied to a second prediction sample according to a second intra prediction mode, respectively.

Alternatively, as an example, when a size of a gradient corresponding to a first intra prediction mode is G1 and a size of a gradient corresponding to a second intra prediction mode is G2, a weight of (G1/(G1+G2))*(2/3) may be applied to a first prediction sample according to a first intra prediction mode, a weight of (G2/(G1+G2))*(2/3) may be applied to a second prediction sample according to a second intra prediction mode and a weight of (1/3) may be applied to a third prediction sample according to a planar mode. As an example, the weight may be approximated by considering an integer-based operation. For example, as in Equation 1 described above, (2/3) may be approximated as (43/64) and (1/3) may be approximated as (21/64). However, this is an example, and of course, this invention is not limited thereto.

As an example, the first intra prediction mode and the second intra prediction mode may share one same reference sample line. Alternatively, a reference sample line may be determined independently for each of first and second intra prediction modes. First and second prediction samples may be generated based on a different reference sample line. In other words, the number/position of reference sample lines used to generate a first prediction sample may be different from the number/position of reference sample line used to generate a second prediction sample.

An embodiment of the present disclosure proposes a method for applying position dependent intra prediction (PDPC) to a prediction block generated based on a gradient-based derivation method. First, PDPC is described below, and a proposed method is described later.

Position Dependent Intra Prediction (PDPC)

PDPC refers to a method for generating a final prediction sample by weighted summing a prediction sample predicted based on a filtered reference sample with an unfiltered reference sample. An embodiment of the present disclosure is not limited to this name, and PDPC may collectively refer to a position-based intra sample modification method, a position-based intra sample filtering method, an intra prediction mode-based intra sample modification method, an intra prediction mode-based intra sample filtering method, etc.

When PDPC is applied, a decoding device may perform filtering based on a predefined filter to derive filtered reference samples, derive a temporary prediction sample of the current block based on an intra prediction mode of a current block and the filtered reference samples and derive a prediction sample of a current block by weighted summing at least one reference sample derived according to an intra prediction mode among the existing reference samples, i.e., the unfiltered reference samples, and the temporary prediction sample. Here, a predefined filter may be one of five 7-tap filters. Alternatively, a predefined filter may be one of a 3-tap filter, a 5-tap filter and a 7-tap filter. The 3-tap filter, the 5-tap filter and the 7-tap filter may represent a filter having three filter coefficients, a filter having five filter coefficients and a filter having seven filter coefficients, respectively.

An intra prediction result generated based on a predefined specific intra prediction mode may be additionally modified by PDPC. In the present disclosure, an intra prediction result generated based on an intra prediction mode may be referred to as an initial prediction sample (a prediction block) or a temporary prediction sample (a prediction block). In other words, PDPC may be applied to a predefined intra prediction mode without separate signaling. For example, a predefined intra prediction mode may include at least one of a planar mode, a DC mode, a directional mode less than or equal to a horizontal mode and a directional mode greater than or equal to a vertical mode.

Alternatively, as an example, PDPC may be applied to a planar mode, a DC mode, a horizontal mode, a vertical mode, an intra prediction mode in a bottom-left direction (i.e., intra prediction mode 2) and 8 directional intra prediction modes adjacent to an intra prediction mode in a bottom-left direction, and an intra prediction mode in a top-right direction and 8 directional intra prediction modes adjacent to an intra prediction mode in the top-right direction.

Specifically, when PDPC is applied, a prediction sample of a (x, y) coordinate predicted based on a linear combination of an intra prediction mode and reference samples may be derived as in the following Equation 2.

$$pred(x,y)=(wL\times R_{-1,y} + wT\times R_{x,-1} - wTL \times R_{-1,-1}+(64 - wL- wT+wTL)\times pred(x,y) + 32)>>6 \qquad \text{[Equation 2]}$$

Here, $R_{x,-1}$ and $R_{-1,y}$ represent a top reference sample and a left reference sample positioned on a top side and a left side of a current sample of a (x, y) coordinate, and $R_{-1,-1}$ represents a top-left reference sample positioned at a top-left corner of the current block.

As an embodiment, weights of PDPC may be derived based on prediction modes. For example, PDPC weights may be derived as in Table 1 below.

[Table 1]

| Prediction modes | wT | wL | wTL |
|---|---|---|---|
| Diagonal top-right | 16 >> ( ( $y'$<<1 ) >> *shift*) | 16 >> ( ( $x'$<<1 ) >> *shift*) | 0 |
| Diagonal bottom-left | 16 >> ( ( $y'$<<1 ) >> *shift* ) | 16 >> ( ( $x'$<<1 ) >> *shift* ) | 0 |
| Adjacent diagonal top-right | 32 >> ( ( $y'$<<1 ) >> *shift* ) | 0 | 0 |
| Adjacent diagonal bottom-left | 0 | 32 >> ( ( $x'$<<1 ) >> *shift* ) | 0 |

Below, a method for applying PDPC to a prediction block generated based on a gradient-based derivation method is described.

Embodiment 1

As described above, a gradient-based derivation method may infer the directivity of a pixel by utilizing information on an already coded (reconstructed) pixel around a current block and utilize this as an intra mode of a current block. In this case, a variety of directivities may be derived according to a gradient between neighboring pixels. Each gradient distribution may be classified into gradient histograms for an intra mode (HoG), and N direction information that is judged to be most similar (i.e., has the largest histogram amplitude) through HoG may be mapped in an intra prediction mode.

If all pixel values of a neighboring pixel are the same, it may be impossible to derive a gradient. In this case, a default mode may be derived by a gradient-based derivation method. As an example, a default mode may be configured as a non-directional mode. A default mode may be configured as a planar mode and/or a DC mode. Alternatively, when a neighboring pixel relationship clearly shows only one specific directivity, one direction information may be derived. In other words, one intra prediction mode may be derived based on a gradient of a neighboring pixel. As an example, when one intra prediction mode is derived, one prediction block may be generated by a corresponding intra prediction mode. Alternatively, as an example, when one intra prediction mode is derived, a prediction block may be generated by weighted summing a prediction block generated by a corresponding intra prediction mode and a prediction block generated by a planar mode.

In the present disclosure, for the convenience of a description, a prediction block generated by using an intra prediction mode derived by a gradient-based derivation method is referred to as an initial prediction block, a prediction block generated by weighted summing an initial prediction block is referred to as an intermediate prediction block and a prediction block modified based on PDPC is referred to as a final prediction block. However, the present disclosure is not limited to this name. For example, when PPDC is not applied, or in an embodiment described mainly based on a gradient-based derivation method, an intermediate prediction block may be a final prediction block. In addition, when a weighted sum of a prediction block is not performed, an initial prediction block may be an intermediate prediction block.

In the process of configuring an intermediate prediction block, when there are a plurality of derived intra prediction modes, a weight may be calculated according to a size (or an amplitude) of a gradient corresponding to each intra prediction mode. For example, if two intra prediction modes are derived, a weight may be calculated according to a size of a gradient indicating two intra prediction modes. And, an intermediate prediction block may be configured by a weighted sum of three modes by adding a weight of a fixed planar mode.

As described above, if only one intra mode is derived, a weighted sum may not be performed with a planar mode prediction block. Alternatively, if only one intra mode is derived, a weighted sum may be performed with a planar mode prediction mode. In addition, a default mode may be configured when a neighboring pixel may not be utilized or when the directivity of a neighboring block may not be specified (N=0 or a non-directional block). In this case, a default mode may be configured as a non-directional mode. A default mode may be configured as a planar mode. A default mode may be configured as a planar mode and/or a DC mode.

As described, when a gradient-based derivation method is applied, a plurality of prediction blocks may be generated according to a derived intra prediction mode, and a prediction block (an intermediate prediction block) may be generated by weighted summing this.

According to an embodiment of the present disclosure, when a gradient-based derivation method is applied, a plurality of intra prediction modes are selected and a weighted sum for a plurality of prediction blocks is performed, whether to apply PDPC may be determined according to an intra prediction mode of each of a plurality of prediction blocks. As an embodiment, PDPC may be applied to a prediction block generated by a directional mode (hereinafter, referred to as a directional mode prediction block), and PDPC may not be applied to a prediction block generated by a planar mode (hereinafter, referred to as a planar mode prediction block). In this case, in applying PDPC to a directional mode prediction block, the above-described PDPC application condition may be considered. In other words, if an intra prediction mode of a directional mode prediction block corresponds to a predefined intra prediction mode for the above-described PDPC application, PDPC may be applied and performed for a directional mode prediction block.

As described above, a weight applied to a planar mode prediction block may be predefined. As an example, a value that a weight of (1/3) is approximated may be defined for an integer operation. A planar mode prediction block may be weighted summed with a directional mode prediction block by applying a weight defined above. As a relatively large weight is already applied to a directional mode prediction block and prediction blocks are weighted summed and blended based on a variety of prediction angles, discontinuity between a reference sample and a prediction sample that PDPC is intended to resolve may be improved. Accordingly, PDPC application to a planar mode prediction block may be omitted and PDPC may be selectively applied only to a directional angle prediction mode, improving computational complexity and compression efficiency.

Embodiment 2

In addition, according to an embodiment of the present disclosure, when a gradient-based derivation method is applied, a plurality of intra prediction modes are selected and a weighted sum is performed for a plurality of prediction blocks, whether to apply PDPC may be determined according to an intra prediction mode of each of a plurality of prediction blocks. As an embodiment, PDPC may be applied to all of a plurality of prediction blocks. In other words, PDPC may be applied to both a directional mode prediction block and a planar mode prediction block, respectively. In this case, in applying PDPC to each prediction block, the above-described PDPC application condition may be considered. In other words, when an intra prediction mode of a prediction block corresponds to a predefined intra prediction mode for the above-described PDPC application, PDPC may be applied and performed.

As described above, a planar mode prediction block may be fixed to about a 1/3 weight and weighted summed with another directional mode prediction block. If PDPC is not applied to a directional mode prediction block according to a PDPC application condition, discontinuity with a neighboring reconstructed sample may be improved by applying PDPC to a planar mode prediction block. In addition, since PDPC is always applied to a planar mode prediction block in general, implementation and design complexity may be reduced by giving consistency to a planar mode prediction method from the perspective of hardware design.

Embodiment 3

According to an embodiment of the present disclosure, when a gradient-based derivation method is applied, a plurality of intra prediction modes are selected and a weighted sum for a plurality of prediction blocks are performed, whether to apply PDPC may be determined based on a directional mode among a plurality of intra prediction modes. As an example, when two directional modes are derived, whether to apply PDPC may be determined according to an angle difference of a directional mode or a size of a gradient.

A PDPC application condition for a directional mode prediction block may be defined as follows. As an example, the following condition may be defined together with a predefined intra prediction mode condition for the above-described PDPC application. Below, it is described by assuming that two directional modes are derived, but the present disclosure is not limited thereto, and substantially the same method may be applied even when at least three directional modes are derived.

1) Whether to apply PDPC to a directional mode prediction block may be determined based on whether a directional mode has different directivity. For example, a directional mode may be classified as a vertical directional mode or a horizontal directional mode according to whether each directional mode is greater than or smaller than a diagonal mode (e.g., intra prediction mode 34). PDPC may be applied to each directional mode prediction block only when a directional mode has different directivity. Alternatively, as another example, since a directional mode prediction block is finally weighted summed, PDPC may be applied to a directional mode prediction block only when a directional mode has the same directivity of vertical directivity or horizontal directivity.

2) Whether to apply PDPC to each directional mode prediction block may be determined based on a size of a gradient of a directional mode (HoG amplitude) or a weight applied to a directional mode prediction block. As an example, when a/b, a ratio of a, a weight of a first prediction mode which is a directional mode, and b, a weight of a second prediction mode, is greater than N or less than 1/N, PDPC may be applied only to a prediction mode with a greater weight. N is a predefined threshold value, and may be an integer greater than or equal to 1. Alternatively, PDPC may be applied only to a prediction block having a larger weight between a, a weight of a first prediction mode which is a directional mode and b, a weight of a second prediction mode. Alternatively, PDPC may be applied only to a prediction block generated by a prediction mode having a larger size of a gradient between a, a weight of a first prediction mode which is a directional mode and b, a weight of a second prediction mode.

3) Whether to apply PDPC to each directional mode prediction block may be determined according to a predefined intra prediction mode condition for the above-described PDPC application of a directional mode. For example, if PDPC may be applied only to one of two directional modes, PDPC may be always applied, and if both directional modes may be applied, condition 1) or 2) above may be applied. Alternatively, for example, if PDPC may be applied only to one of two directional modes, PDPC may not be always applied, and if both directional modes may be applied, condition 1) or 2) above may be applied.

In addition, whether to apply PDPC to a directional prediction block may be determined based on a condition through a combination of conditions 1), 2) and 3) described above (i.e., 1) and 2), 1) and 3), 2) and 3) and 1) to 3)).

If PDPC is selectively applied through a proposed method, prediction performance may be improved, and computational complexity of PDPC processed in a unit of a pixel may be improved. In addition, this embodiment may also be applied in combination with embodiment 1 or embodiment 2 above.

Embodiment 4

According to an embodiment of the present disclosure, when a gradient-based derivation method is applied and a plurality of intra prediction modes are selected to perform a weighted sum for a plurality of prediction blocks, whether to apply PDPC may be determined according to an intra prediction mode of each of a plurality of prediction blocks. As an embodiment, PDPC may not be applied to a directional mode prediction block, and PDPC may be applied to a planar mode prediction block. In this case, in applying PDPC to a planar mode prediction block, the above-described PDPC application condition may be considered, and since a planar mode is included in a predefined intra prediction mode for the above-described PDPC application, PDPC may be applied and performed to a planar mode prediction block.

According to this embodiment, since discontinuity between a reference sample and a prediction sample that PDPC seeks to resolve may be improved while weighted summing a directional mode prediction block, computational complexity may be greatly reduced and compression efficiency may be improved by omitting PDPC for a directional mode prediction block.

Embodiment 5

According to an embodiment of the present disclosure, when a gradient-based derivation method is applied, a plurality of intra prediction modes are selected and a weighted sum for a plurality of prediction blocks is performed, a method is proposed in which PDPC is not applied to each prediction block.

Through a proposed method, discontinuity between a reference sample and a prediction sample that PDPC seeks to resolve may be improved while weighted summing a directional mode prediction block and a planar mode prediction block, so PPDC, an overlapping process, may be omitted. By omitting PDPC that requires an operation in a unit of a pixel, computational complexity may be greatly reduced and compression efficiency may be improved.

Embodiment 6

According to an embodiment of the present disclosure, when a gradient-based derivation method is applied, a plurality of intra prediction modes are selected and a weighted sum for a plurality of prediction blocks is performed, PDPC may be applied to a prediction block (an intermediate prediction block) on which a weighted sum is performed.

As an embodiment, whether to apply PDPC may be determined based on a block size and/or a prediction mode. In addition, whether to apply PDPC to a weighted summed prediction block may be determined according to a condition such as the following examples.

1) Whether to apply PDPC to a weighted summed prediction block may be determined based on a main directional mode. A main directional mode represents a directional mode with the largest size of a gradient (an amplitude of a gradient, a histogram size, a histogram amplitude). As an example, when a main directional mode satisfies a predefined intra prediction mode condition for the above-described PDPC application, PDPC may be applied to a weighted summed prediction block.

In addition, as an example, if a main directional mode does not satisfy a PDPC application standard, whether to apply PDPC may be determined according to a second directional mode. A second directional mode represents a directional mode with the second largest size of a gradient.

2) A PDPC application method for a planar mode may be followed.

According to this embodiment, discontinuity with a neighboring reconstructed sample may be improved through a weighted sum for a prediction block, and PDPC requiring an operation in a unit of a pixel may be performed only once instead of multiple times, reducing computational complexity and improving compression efficiency.

FIG. 5 shows a rough configuration of an intra prediction unit 331 that performs an intra prediction method according to the present disclosure.

Referring to FIG. 5, an intra prediction unit 331 may include a prediction mode derivation unit 500, a reference sample configuration unit 510, and a prediction block generation unit 520.

A prediction mode derivation unit 500 may derive an intra prediction mode of a current block.

An intra prediction mode of a current block may be derived from intra prediction modes that are pre-defined in a decoding device. The pre-defined intra prediction modes may include a non-directional mode and a directional mode. Here, a non-directional mode may include at least one of a planar mode or a DC mode. An intra prediction mode of a current block may be derived based on a most probable mode (MPM) or may be derived based on a gradient based on at least two samples belonging to a neighboring region of a current block.

A gradient may be calculated based on at least two samples belonging to a neighboring region of a current block. Here, a gradient may include at least one of a horizontal gradient or a vertical gradient. Based on at least one of the calculated gradient or a size (amplitude) of a gradient, an intra prediction mode of a current block may be derived. Here, a size of a gradient may be determined based on the sum of the horizontal gradient and the vertical gradient. Through this derivation method, one intra prediction mode may be derived for a current block, or at least two intra prediction modes may be derived. It is the same as described by referring to FIG. 4, and a detailed description is omitted here.

A reference sample configuration unit 510 may determine a reference sample for intra prediction of a current block from one or more reference sample lines. To this end, a reference sample determination unit 510 may select one or more reference sample lines from a plurality of reference sample line candidates that are pre-defined equally for an encoding device and a decoding device. Predetermined index information may be used to select a reference sample line, which is the same as described by referring to FIG. 4.

A prediction block generation unit 520 may perform intra prediction of a current block based on a reference sample and an intra prediction mode of a current block. A specific intra prediction method is the same as described by referring to FIG. 4, and an overlapping description is omitted here.

As described above, a prediction block generation unit 520 may generate a plurality of temporary prediction blocks based on each of a plurality of derived intra prediction modes when a plurality of intra prediction modes are derived based on a gradient between at least two samples, and generate a prediction block of the current block by weighted summing a planar temporary prediction block generated by a planar mode and the plurality of temporary prediction blocks.

As described above, a prediction block generation unit 520 may modify a prediction block or a temporary prediction block of the current block by applying position dependent intra prediction to the current block.

As described above, a prediction block generation unit 520 may apply the position dependent intra prediction to each of the plurality of temporary prediction blocks according to whether each of the plurality of temporary prediction blocks is predicted by one of the predefined intra prediction modes.

As described above, a prediction block generation unit 520 may individually apply the position dependent intra prediction to the plurality of temporary prediction blocks and the planar temporary prediction block.

As described above, a prediction block generation unit 520 may apply the position dependent intra prediction only to the planar temporary prediction block among the plurality of temporary prediction blocks and the planar temporary prediction block.

As described above, a prediction block generation unit 520 may determine whether to apply the position dependent intra prediction based on at least one of a prediction direction of the plurality of intra prediction modes, a size of a gradient for the plurality of intra prediction modes or a weight applied to the weighted sum.

As described above, a prediction block generation unit 520 may apply the position dependent intra prediction only to a temporary prediction block generated by a main intra prediction mode having the largest size of a gradient among the plurality of intra prediction modes.

As described above, a prediction block generation unit 520 may apply the position dependent intra prediction to a prediction block of the current block that is a weighted sum of the plurality of temporary prediction blocks and the planar temporary prediction block.

As described above, a prediction block generation unit 520 may determine whether to apply the position dependent intra prediction according to whether a main intra prediction mode having the largest size of a gradient among the plurality of intra prediction modes is one of the predefined intra prediction modes.

As described above, a prediction block generation unit 520 may not apply position dependent intra prediction to the current block when the gradient-based intra prediction mode derivation method is applied to the current block.

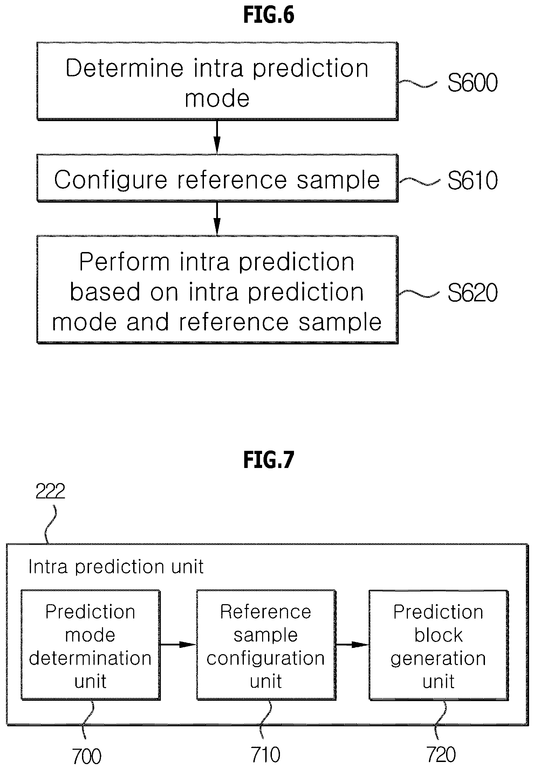

FIG. 6 shows an intra prediction method performed by an encoding device as an embodiment according to the present disclosure.

Referring to FIG. 6, an intra prediction mode of a current block may be determined S600.

An intra prediction mode of a current block may be determined from intra prediction modes that are pre-defined in an encoding device. An intra prediction mode of a current block may be determined based on a MPM, or may be determined based on a gradient based on at least two samples belonging to a neighboring region of a current block.

MPM-based Determination Method

According to a MPM-based determination method, an optimal intra prediction mode for a current block may be determined, and intra prediction mode information for specifying this may be encoded into a bitstream. In this way, it may be distinguished from a template region-based determination method described later in that intra prediction mode information is encoded and transmitted to a decoding device.

Intra prediction modes that are pre-defined in an encoding device may be divided into K groups. Here, K may be an integer of 2, 3, 4, or more. As an example, the pre-defined intra prediction modes may be divided into three groups, and a method for configuring three groups is as described in FIG. 4.

One or more flags may be encoded into a bitstream to specify a group and/or a sub-group to which the same mode as an intra prediction mode of a current block belongs. Here, a flag may include at least one of a first flag indicating whether the same mode as an intra prediction mode of a current block belongs to a first group, a second flag indicating whether the same mode as an intra prediction mode of a current block belongs to a second group (i.e., a MPM list), a third flag indicating whether the same mode as an intra prediction mode of a current block belongs to a primary MPM list, or a fourth flag indicating whether the same mode as an intra prediction mode of a current block belongs to a secondary MPM list.

If an intra prediction mode of a current block belongs to a second group, an index specifying any one of a plurality of MPMs belonging to a second group may be encoded into a bitstream. The index may specify a MPM that is the same as an intra prediction mode of a current block among a plurality of MPMs belonging to a second group. Alternatively, when an intra prediction mode of a current block belongs to a primary MPM list, an index specifying any one of a plurality of MPMs belonging to a primary MPM list may be encoded into a bitstream. The index may specify a MPM that is the same as an intra prediction mode of a current block among a plurality of MPMs belonging to a primary MPM list. Alternatively, when an intra prediction mode of a current block belongs to a secondary MPM list, an index specifying any one of a plurality of MPMs belonging to a secondary MPM list may be encoded into a bitstream. The index may specify a MPM that is the same as an intra prediction mode of a current block among a plurality of MPMs belonging to a secondary MPM list. Similarly, if an intra prediction mode of a current block belongs to a first group (or a third group), an index specifying any one of a plurality of intra prediction modes belonging to a first group (or a third group) may be encoded into a bitstream. The index may specify the same mode as an intra prediction mode of a current block among a plurality of intra prediction modes belonging to a first group (or a third group). However, when a first group (or a third group) consists of one intra prediction mode, encoding of the index may be omitted.

The above-described flag may be encoded with dependency between flags. As an example, a first flag may be encoded after a second flag is encoded into a bitstream. A first flag may be encoded when a second flag is True. Alternatively, a second flag may be encoded after a first flag is encoded into a bitstream. A second flag may be encoded when a first flag is False. If a second flag is True, a third flag (or, a fourth flag) may be encoded into a bitstream, and if a second flag is False, a third flag (or, a fourth flag) may not be encoded into a bitstream. Alternatively, a fourth flag may be encoded after a third flag is encoded into a bitstream. A fourth flag may be encoded when a third flag is False.

Gradient-based Determination Method

A gradient may be calculated based on at least two samples belonging to a neighboring region of a current block. Based on at least one of the calculated gradient or an amplitude of a gradient, an intra prediction mode of a current block may be determined. Through this determination method, one intra prediction mode may be derived for a current block, or at least two intra prediction modes may be derived. A specific gradient-based determination method is the same as described by referring to FIG. 4, and an overlapping description is omitted here. In other words, a gradient-based determination method may be applied substantially in the same manner as a gradient-based derivation method described by referring to FIG. 4 above.

Referring to FIG. 6, a reference sample of a current block may be configured S610.

A reference sample for intra prediction of a current block may be configured from one or more reference sample lines. A current block may use one reference sample line, or may use at least two reference sample lines.

A reference sample line for intra prediction of a current block may be selected from a plurality of reference sample line candidates that are pre-defined equally for an encoding device and a decoding device. The plurality of pre-defined reference sample line candidates may include at least one of a first reference sample line adjacent to a current block, a second reference sample line 1 sample away from a current block, a third reference sample line 2 samples away from a current block, or a fourth reference sample line 3 samples away from a current block.

Index information specifying a position of a reference sample line to which a reference sample of a current block belongs may be encoded into a bitstream. As an example, index information specifying any one of the plurality of reference sample line candidates may be encoded. Alternatively, when two reference sample lines are used for intra prediction of a current block, two index information specifying two reference sample lines among a plurality of reference sample line candidates may be encoded, respectively. Alternatively, as any one of the two reference sample lines is a default reference sample line, encoding of index information therefor may be omitted, and only index information for the other may be encoded. Here, a default reference sample line refers to a reference sample line at a pre-defined position equally for an encoding device and a decoding device, and for example, it may be a first reference sample line adjacent to a current block.

Meanwhile, a reference sample line of a current block may be used to determine an intra prediction mode of a current block, and in this case, S610 may be performed before S600.

Referring to FIG. 6, a prediction block of a current block may be generated based on a reference sample and an intra prediction mode of a current block S620.

A method for generating a prediction block is the same as described by referring to FIG. 4, and a detailed description is omitted here. A residual sample, a difference between a prediction sample and an original sample of a current block, may be generated, and it may be encoded to generate a bitstream.

Meanwhile, a plurality of reference sample lines may be used for intra prediction of a current block, and in this case, a projected position may exist for each reference sample line. In other words, a plurality of samples at a projected position may be determined, and a prediction sample of a current block may be generated based on a weighted sum thereof.

When one intra prediction mode is determined for a current block through a MPM-based determination method, intra prediction of a current block may be performed based on a corresponding intra prediction mode.

Meanwhile, a gradient-based determination method may infer the directivity of a pixel by utilizing information on an already coded (reconstructed) pixel around a current block and utilize this as an intra mode of a current block. In this case, a variety of directivities may be determined according to a gradient between neighboring pixels. Each gradient distribution may be classified into gradient histograms for an intra mode (HoG), and N direction information that is judged to be most similar (i.e., has the largest histogram amplitude) through HoG may be mapped in an intra prediction mode.

If all pixel values of a neighboring pixel are the same, it may be impossible to determine a gradient. In this case, a default mode may be determined by a gradient-based determination method. As an example, a default mode may be configured as a non-directional mode. A default mode may be configured as a planar mode and/or a DC mode. Alternatively, if a neighboring pixel relationship clearly shows only one specific directivity, one direction information may be determined. In other words, one intra prediction mode may be determined based on a gradient of a neighboring pixel. As an example, if one intra prediction mode is determined, one prediction block may be generated by a corresponding intra prediction mode. Alternatively, as an example, if one intra prediction mode is determined, a prediction block may be generated by weighted summing a prediction block generated by a corresponding intra prediction mode and a prediction block generated by a planar mode.

In the present disclosure, for the convenience of a description, a prediction block generated by using an intra prediction mode determined by a gradient-based determination method is referred to as an initial prediction block, a prediction block generated by weighted summing an initial prediction block is referred to as an intermediate prediction block and a prediction block modified based on PDPC is referred to as a final prediction block. However, the present disclosure is not limited to this name. For example, when PPDC is not applied, or in an embodiment described mainly based on a gradient-based determination method, an intermediate prediction block may be a final prediction block. In addition, when a weighted sum of a prediction block is not performed, an initial prediction block may be an intermediate prediction block.

In the process of configuring an intermediate prediction block, when there are a plurality of determinated intra prediction modes, a weight may be calculated according to a size (or an amplitude) of a gradient corresponding to each intra prediction mode. For example, if two intra prediction modes are determined, a weight may be calculated according to a size of a gradient indicating two intra prediction modes. And, an intermediate prediction block may be configured by a weighted sum of three modes by adding a weight of a fixed planar mode.

As described above, if only one intra mode is derived, a weighted sum may not be performed with a planar mode prediction block. Alternatively, if only one intra mode is derived, a weighted sum may be performed with a planar mode prediction mode. In addition, a default mode may be configured when a neighboring pixel may not be utilized or when the directivity of a neighboring block may not be specified (N=0 or a non-directional block). In this case, a default mode may be configured as a non-directional mode. A default mode may be configured as a planar mode. A default mode may be configured as a planar mode and/or a DC mode.

As described, when a gradient-based determination method is applied, a plurality of prediction blocks may be generated according to a determined intra prediction mode, and a prediction block (an intermediate prediction block) may be generated by weighted summing this.

According to an embodiment of the present disclosure, when a gradient-based determination method is applied, a plurality of intra prediction modes are selected and a weighted sum for a plurality of prediction blocks is performed, whether to apply PDPC may be determined according to an intra prediction mode of each of a plurality of prediction blocks. As an embodiment, PDPC may be applied to a prediction block generated by a directional mode (hereinafter, referred to as a directional mode prediction block), and PDPC may not be applied to a prediction block generated by a planar mode (hereinafter, referred to as a planar mode prediction block). In this case, in applying PDPC to a directional mode prediction block, the above-described PDPC application condition may be considered. In other words, if an intra prediction mode of a directional mode prediction block corresponds to a predefined intra prediction mode for the above-described PDPC application, PDPC may be applied and performed for a directional mode prediction block.

As described above, a weight applied to a planar mode prediction block may be predefined. As an example, a value that a weight of (1/3) is approximated may be defined for an integer operation. A planar mode prediction block may be weighted summed with a directional mode prediction block by applying a weight defined above. As a relatively large weight is already applied to a directional mode prediction block and prediction blocks are weighted summed and blended based on a variety of prediction angles, discontinuity between a reference sample and a prediction sample that PDPC is intended to resolve may be improved. Accordingly, PDPC application to a planar mode prediction block may be omitted and PDPC may be selectively applied only to a directional angle prediction mode, improving computational complexity and compression efficiency.

In addition, according to an embodiment of the present disclosure, when a gradient-based determination method is applied, a plurality of intra prediction modes are selected and a weighted sum for a plurality of prediction blocks is performed, whether to apply PDPC may be determined according to an intra prediction mode of each of a plurality of prediction blocks. As an embodiment, PDPC may be applied to all of a plurality of prediction blocks. In other words, PDPC may be applied to both a directional mode prediction block and a planar mode prediction block, respectively. In this case, in applying PDPC to each prediction block, the above-described PDPC application condition may be considered. In other words, when an intra prediction mode of a prediction block corresponds to a predefined intra prediction mode for the above-described PDPC application, PDPC may be applied and performed.

As described above, a planar mode prediction block may be fixed to about a 1/3 weight and weighted summed with another directional mode prediction block. If PDPC is not applied to a directional mode prediction block according to a PDPC application condition, discontinuity with a neighboring reconstructed sample may be improved by applying PDPC to a planar mode prediction block. In addition, since PDPC is always applied to a planar mode prediction block in general, implementation and design complexity may be reduced by giving consistency to a planar mode prediction method from the perspective of hardware design.

According to an embodiment of the present disclosure, when a gradient-based determination method is applied, a plurality of intra prediction modes are selected and a weighted sum for a plurality of prediction blocks is performed, whether to apply PDPC may be determined based on a directional mode among a plurality of intra prediction modes. As an example, when two directional modes are determined, whether to apply PDPC may be determined according to an angle difference of a directional mode or a size of a gradient.

A PDPC application condition for a directional mode prediction block may be defined as follows. As an example, the following condition may be defined together with a predefined intra prediction mode condition for the above-described PDPC application. Below, it is described by assuming that two directional modes are determined, but the present disclosure is not limited thereto, and substantially the same method may be applied even when at least three directional modes are determined.

1) Whether to apply PDPC to a directional mode prediction block may be determined based on whether a directional mode has different directivity. For example, a directional mode may be classified as a vertical directional mode or a horizontal directional mode according to whether each directional mode is greater than or smaller than a diagonal mode (e.g., intra prediction mode 34). PDPC may be applied to each directional mode prediction block only when a directional mode has different directivity. Alternatively, as another example, since a directional mode prediction block is finally weighted summed, PDPC may be applied to a directional mode prediction block only when a directional mode has the same directivity of vertical directivity or horizontal directivity.

2) Whether to apply PDPC to each directional mode prediction block may be determined based on a size of a gradient of a directional mode (HoG amplitude) or a weight applied to a directional mode prediction block. As an example, when a/b, a ratio of a, a weight of a first prediction mode which is a directional mode, and b, a weight of a second prediction mode, is greater than N or less than 1/N, PDPC may be applied only to a prediction mode with a greater weight. N is a predefined threshold value, and may be an integer greater than or equal to 1. Alternatively, PDPC may be applied only to a prediction block having a larger weight between a, a weight of a first prediction mode which is a directional mode and b, a weight of a second prediction mode. Alternatively, PDPC may be applied only to a prediction block generated by a prediction mode having a larger size of a gradient between a, a weight of a first prediction mode which is a directional mode and b, a weight of a second prediction mode.

3) Whether to apply PDPC to each directional mode prediction block may be determined according to a predefined intra prediction mode condition for the above-described PDPC application of a directional mode. For example, if PDPC may be applied only to one of two directional modes, PDPC may be always applied, and if both directional modes may be applied, condition 1) or 2) above may be applied. Alternatively, for example, if PDPC may be applied only to one of two directional modes, PDPC may not be always applied, and if both directional modes may be applied, condition 1) or 2) above may be applied.

In addition, whether to apply PDPC to a directional prediction block may be determined based on a condition through a combination of conditions 1), 2) and 3) described above (i.e., 1) and 2), 1) and 3), 2) and 3) and 1) to 3)).

If PDPC is selectively applied through a proposed method, prediction performance may be improved, and computational complexity of PDPC processed in a unit of a pixel may be improved. In addition, this embodiment may also be applied in combination with embodiment 1 or embodiment 2 above.

According to an embodiment of the present disclosure, when a gradient-based determination method is applied, a plurality of intra prediction modes are selected and a weighted sum for a plurality of prediction blocks is performed, whether to apply PDPC may be determined according to an intra prediction mode of each of a plurality of prediction blocks. As an embodiment, PDPC may not be applied to a directional mode prediction block, and PDPC may be applied to a planar mode prediction block. In this case, in applying PDPC to a planar mode prediction block, the above-described PDPC application condition may be considered, and since a planar mode is included in a predefined intra prediction mode for the above-described PDPC application, PDPC may be applied and performed to a planar mode prediction block.

According to this embodiment, since discontinuity between a reference sample and a prediction sample that PDPC seeks to resolve may be improved while weighted summing a directional mode prediction block, computational complexity may be greatly reduced and compression efficiency may be improved by omitting PDPC for a directional mode prediction block.

According to an embodiment of the present disclosure, when a gradient-based determination method is applied, a plurality of intra prediction modes are selected and a weighted sum for a plurality of prediction blocks is performed, a method is proposed in which PDPC is not applied to each prediction block.

Through a proposed method, discontinuity between a reference sample and a prediction sample that PDPC seeks to resolve may be improved while weighted summing a directional mode prediction block and a planar mode prediction block, so PPDC, an overlapping process, may be omitted. By omitting PDPC that requires an operation in a unit of a pixel, computational complexity may be greatly reduced and compression efficiency may be improved.

According to an embodiment of the present disclosure, when a gradient-based determination method is applied, a plurality of intra prediction modes are selected and a weighted sum for a plurality of prediction blocks is performed, PDPC may be applied to a prediction block (an intermediate prediction block) on which a weighted sum is performed.

As an embodiment, whether to apply PDPC may be determined based on a block size and/or a prediction mode. In addition, whether to apply PDPC to a weighted summed prediction block may be determined according to a condition such as the following examples.

1) Whether to apply PDPC to a weighted summed prediction block may be determined based on a main directional mode. A main directional mode represents a directional mode with the largest size of a gradient (an amplitude of a gradient, a histogram size, a histogram amplitude). As an example, when a main directional mode satisfies a predefined intra prediction mode condition for the above-described PDPC application, PDPC may be applied to a weighted summed prediction block.

In addition, as an example, if a main directional mode does not satisfy a PDPC application standard, whether to apply PDPC may be determined according to a second directional mode. A second directional mode represents a directional mode with the second largest size of a gradient.

2) A PDPC application method for a planar mode may be followed.

According to this embodiment, discontinuity with a neighboring reconstructed sample may be improved through a weighted sum for a prediction block, and PDPC requiring an operation in a unit of a pixel may be performed only once instead of multiple times, reducing computational complexity and improving compression efficiency.

FIG. 7 shows a rough configuration of an intra prediction unit 222 that performs an intra prediction method according to the present disclosure.

Referring to FIG. 7, an intra prediction unit 222 may include a prediction mode determination unit 700, a reference sample configuration unit 710, and a prediction sample generation unit 720.

A prediction mode determination unit 700 may determine an intra prediction mode of a current block.

An intra prediction mode of a current block may be determined from intra prediction modes that are pre-defined in an encoding device. An intra prediction mode of a current block may be determined based on a MPM, or may be determined based on a gradient of a neighboring region of a current block. It is the same as described by referring to FIG. 6, and a detailed description is omitted here.

A reference sample configuration unit 710 may configure a reference sample for intra prediction of a current block from one or more reference sample lines. To this end, a reference sample configuration unit 710 may select one or more reference sample lines from a plurality of reference sample line candidates that are pre-defined equally for an encoding device and a decoding device. Predetermined index information specifying a selected reference sample line may be encoded into a bitstream.

A prediction sample generation unit 720 may perform intra prediction of a current block based on a reference sample and an intra prediction mode of a current block. A specific intra prediction method is the same as described by referring to FIG. 6, and an overlapping description is omitted here.

A prediction sample generation unit 720 may perform intra prediction of a current block based on a reference sample and an intra prediction mode of a current block. A specific intra prediction method is the same as described by referring to FIG. 4, and an overlapping description is omitted here.

As described above, a prediction block generation unit 720 may generate a plurality of temporary prediction blocks based on each of a plurality of determined intra prediction modes when a plurality of intra prediction modes are determined based on a gradient between at least two samples, and generate a prediction block of the current block by weighted summing a planar temporary prediction block generated by a planar mode and the plurality of temporary prediction blocks.

As described above, a prediction block generation unit 720 may modify a prediction block or a temporary prediction block of the current block by applying position dependent intra prediction to the current block.

As described above, a prediction block generation unit 720 may apply the position dependent intra prediction to each of the plurality of temporary prediction blocks according to whether each of the plurality of temporary prediction blocks is predicted by one of the predefined intra prediction modes.

As described above, a prediction block generation unit 720 may individually apply the position dependent intra prediction to the plurality of temporary prediction blocks and the planar temporary prediction block.

As described above, a prediction block generation unit 720 may apply the position dependent intra prediction only to the planar temporary prediction block among the plurality of temporary prediction blocks and the planar temporary prediction block.

As described above, a prediction block generation unit 720 may determine whether to apply the position dependent intra prediction based on at least one of a prediction direction of the plurality of intra prediction modes, a size of a gradient for the plurality of intra prediction modes or a weight applied to the weighted sum.

As described above, a prediction block generation unit 720 may apply the position dependent intra prediction only to a temporary prediction block generated by a main intra prediction mode having the largest size of a gradient among the plurality of intra prediction modes.

As described above, a prediction block generation unit 720 may apply the position dependent intra prediction to a prediction block of the current block that is a weighted sum of the plurality of temporary prediction blocks and the planar temporary prediction block.

As described above, a prediction block generation unit 720 may determine whether to apply the position dependent intra prediction according to whether a main intra prediction mode having the largest size of a gradient among the plurality of intra prediction modes is one of the predefined intra prediction modes.

As described above, a prediction block generation unit 720 may not apply position dependent intra prediction to the current block when the gradient-based intra prediction mode derivation method is applied to the current block.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding device and/or a decoding device according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding device and an encoding device to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

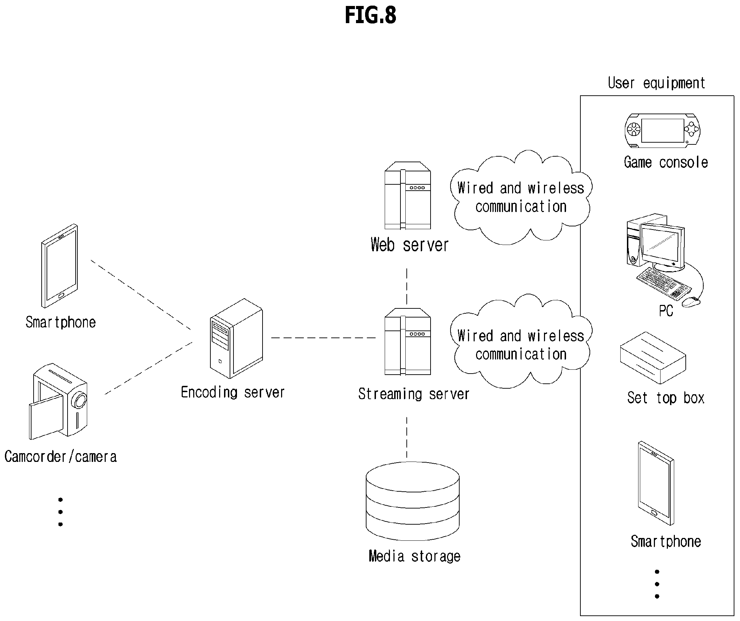

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

## Claims

1. An image decoding method, the method comprising:

   deriving an intra prediction mode of a current block based on a gradient between at least two samples belonging to a neighboring region adjacent to the current block;
   configuring a reference sample of the current block; and
   based on the intra prediction mode and the reference sample, generating a prediction block of the current block.

2. The method of claim 1, wherein generating the prediction block of the current block includes:

   when a plurality of intra prediction modes are derived based on the gradient between the at least two samples, generating a plurality of temporary prediction blocks based on each of the plurality of derived intra prediction modes; and
   by weighted summing the plurality of temporary prediction blocks and a planar temporary prediction block generated by a planar mode, generating the prediction block of the current block.

3. The method of claim 2, wherein:
   the method further includes modifying the prediction block or a temporary prediction block of the current block by applying a position dependent intra prediction to the current block.

4. The method of claim 3, wherein:
   the position dependent intra prediction is applied to each of the plurality of temporary prediction blocks according to whether each of the plurality of temporary prediction blocks is predicted by one of predefined intra prediction modes.

5. The method of claim 3, wherein:
   the position dependent intra prediction is individually applied to the plurality of temporary prediction blocks and the planar temporary prediction block.

6. The method of claim 3, wherein:
   the position dependent intra prediction is applied only to the planar temporary prediction block among the plurality of temporary prediction blocks and the planar temporary prediction block.

7. The method of claim 3, wherein:
   whether the position dependent intra prediction is applied is determined based on at least one of a prediction direction of the plurality of intra prediction modes, a size of a gradient for the plurality of intra prediction modes or a weight applied to the weighted sum.

8. The method of claim 7, wherein:
the position dependent intra prediction is applied only to a temporary prediction block generated by a main intra prediction mode having a largest size of a gradient among the plurality of intra prediction modes.

9. The method of claim 3, wherein:
the position dependent intra prediction is applied to the prediction block of the current block that is a weighted sum of the plurality of temporary prediction blocks and the planar temporary prediction block.

10. The method of claim 9, wherein:
whether to apply the position dependent intra prediction is determined according to whether a main intra prediction mode having a largest size of a gradient among the plurality of intra prediction modes is one of predefined intra prediction modes.

11. The method of claim 1, wherein:
when the gradient-based intra prediction mode derivation method is applied to the current block, a position dependent intra prediction is not applied to the current block.

12. An image encoding method, the method comprising:

determining an intra prediction mode of a current block based on a gradient between at least two samples belonging to a neighboring region adjacent to the current block;
configuring a reference sample of the current block; and
based on the intra prediction mode and the reference sample, generating a prediction block of the current block.

13. A computer readable storage medium storing a bitstream generated by an image encoding method according to claim 12.

14. A method for transmitting data for image information, the method comprising:

determining an intra prediction mode of a current block based on a gradient between at least two samples belonging to a neighboring region adjacent to the current block;
configuring a reference sample of the current block;
based on the intra prediction mode and the reference sample, generating a prediction block of the current block;
generating a bitstream by encoding the current block based on the prediction block; and
transmitting data including the bitstream.

# FIG.1

**FIG.2**

**FIG.3**

## FIG.4

Derive intra prediction mode ~ S400

Determine reference sample ~ S410

Perform intra prediction based on intra prediction mode and reference sample ~ S420

## FIG.5

331

Intra prediction unit

| Prediction mode derivation unit | → | Reference sample configuration unit | → | Prediction block generation unit |

500　　　　　　　510　　　　　　　520

## FIG.6

Determine intra prediction
mode —— S600

Configure reference sample —— S610

Perform intra prediction
based on intra prediction —— S620
mode and reference sample

## FIG.7

222

Intra prediction unit

| Prediction<br>mode<br>determination<br>unit | Reference<br>sample<br>configuration<br>unit | Prediction<br>block<br>generation<br>unit |
|---|---|---|

700                 710                 720

# FIG.8

Smartphone

Camcorder/camera

Encoding server

Web server

Streaming server

Media storage

Wired and wireless communication

Wired and wireless communication

User equipment

Game console

PC

Set top box

Smartphone

## INTERNATIONAL SEARCH REPORT

| International application No. |
| --- |
| **PCT/KR2023/001839** |

**A.    CLASSIFICATION OF SUBJECT MATTER**

**H04N 19/11**(2014.01)i; **H04N 19/593**(2014.01)i; **H04N 19/184**(2014.01)i; **H04N 19/70**(2014.01)i; **H04N 19/119**(2014.01)i

According to International Patent Classification (IPC) or to both national classification and IPC

**B.    FIELDS SEARCHED**

Minimum documentation searched (classification system followed by classification symbols)

H04N 19/11(2014.01); H04N 19/154(2014.01); H04N 19/176(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 현재 블록(current block), 주변(neighbor), 샘플(sample), 변화량(gradient), 인트라(intra), 예측(prediction), 모드(mode), 플래너 모드(Planar mode), 위치 의존적인 인트라 예측(position dependent intra prediction)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2021-0134407 A (TENCENT AMERICA LLC) 09 November 2021 (2021-11-09)<br>See paragraphs [0009], [0038], [0048], [0058] and [0067]; claim 1; and figures 5 and 6d. | 1-2,12-14 |
| Y | | 3-6,11 |
| A | | 7-10 |
| Y | JHU, Hong-Jheng et al. AHG12: On the PDPC handling in DIMD and TIMD. Joint Video Experts Team (JVET) of ITU-T SG 16 WP 3 and ISO/IEC JTC 1/SC 29 24th Meeting, by teleconference, JVET-X0148-v2. 11 October 2021. [Retrieved on 02 May 2023]. Retrieved from <URL: https://www.jvet-experts.org/doc_end_user/current_document.php?id=11141>.<br>See pages 2-3; and figures 2-4. | 3-6 |
| Y | ZHANG, Jinrong et al. PDPC skip for angular intra modes. Joint Video Experts Team (JVET) of ITU-T SG 16 WP 3 and ISO/IEC JTC 1/SC 29 24th Meeting, by teleconference, JVET-X0072-v2. 05 October 2021. [Retrieved on 02 May 2023]. Retrieved from <URL: https://www.jvet-experts.org/doc_end_user/current_document.php?id=11065>.<br>See page 4; and figure 6. | 11 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 May 2023** | **30 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/001839** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2019-0166370 A1 (VID SCALE, INC.) 30 May 2019 (2019-05-30)<br>See paragraphs [0004]-[0018]; and claims 1-8, 10 and 12-19. | 1-14 |
| A | WO 2019-007490 A1 (HUAWEI TECHNOLOGIES CO., LTD. et al.) 10 January 2019 (2019-01-10)<br>See page 4, line 3 - page 7, line 27; and claims 1-7. | 1-14 |

Form PCT/ISA/210 (second sheet) (July 2022)

**INTERNATIONAL SEARCH REPORT**
**Information on patent family members**

International application No.

**PCT/KR2023/001839**

| Patent document cited in search report | | | Publication date (day/month/year) | Patent family member(s) | | | Publication date (day/month/year) |
|---|---|---|---|---|---|---|---|
| KR | 10-2021-0134407 | A | 09 November 2021 | CN | 113767633 | A | 07 December 2021 |
| | | | | EP | 3925221 | A1 | 22 December 2021 |
| | | | | JP | 2022-529645 | A | 23 June 2022 |
| | | | | US | 11197001 | B2 | 07 December 2021 |
| | | | | US | 2021-0243452 | A1 | 05 August 2021 |
| | | | | US | 2022-0030252 | A1 | 27 January 2022 |
| | | | | WO | 2021-158615 | A1 | 12 August 2021 |
| US | 2019-0166370 | A1 | 30 May 2019 | EP | 3453174 | A1 | 13 March 2019 |
| | | | | WO | 2017-192995 | A1 | 09 November 2017 |
| WO | 2019-007490 | A1 | 10 January 2019 | EP | 3643062 | A1 | 29 April 2020 |
| | | | | US | 11284086 | B2 | 22 March 2022 |
| | | | | US | 2020-0145668 | A1 | 07 May 2020 |

Form PCT/ISA/210 (patent family annex) (July 2022)